# EUROPÄISCHE PATENTSCHRIFT

(11) **EP 1 509 963 B1**
(45) Veröffentlichungstag und Bekanntmachung des Hinweises auf die Patenterteilung: **29.11.2006**
(21) Anmeldenummer: 03727232.5
(22) Anmeldetag: 10.05.2003
(51) Int. Cl.: H01M 8/04, H01M 8/06

(54) **NIEDERTEMPERATUR-BRENNSTOFFZELLENSYSTEM SOWIE VERFAHREN ZUM BETREIBEN EINES SOLCHEN**
LOW-TEMPERATURE FUEL CELL SYSTEM AND METHOD FOR OPERATING THE SAME
SYSTEME DE PILES A COMBUSTIBLE BASSE TEMPERATURE ET PROCEDE POUR LE FAIRE FONCTIONNER

(30) Priorität: 10.06.2002 DE 10225557
(43) Veröffentlichungstag der Anmeldung: 02.03.2005
(73) Patentinhaber: Forschungszentrum Jülich GmbH, 52425 Jülich (DE)
(72) Erfinder: DOHLE, Hendrik, 52224 Stolberg (DE); BEWER, Thomas, 52074 Aachen (DE); STOLTEN, Detlef, 52076 Aachen (DE)
(86) Internationale Anmeldenummer: PCT/DE2003/001511
(87) Internationale Veröffentlichungsnummer: WO 2003/105260

(56) Entgegenhaltungen:
- DE-A- 10 021 946
- FR-A- 2 828 011
- US-A1- 2002 098 395
- PATENT ABSTRACTS OF JAPAN vol. 2000, no. 10, 17. November 2000 (2000-11-17) & JP 2000 208159 A (NISSAN MOTOR CO LTD), 28. Juli 2000 (2000-07-28)

## Beschreibung

Die Erfindung betrifft ein Brennstoffzellensystem, insbesondere eines mit wenigstens einer Niedertemperatur-Brennstoffzelle, sowie ein Verfahren zum effektiven Betreiben eines solchen Brennstoffzellensystems.

### Stand der Technik

Brennstofzellenstapel bestehen aus mehreren hintereinander geschalteten Brennstoffzellen. Neben einer Mehrzahl von Brennstoffeinzelzellen mit jeweils einer Anode, einer Kathode sowie einem dazwischen angeordneten Elektrolyten, umfasst ein Brennstoffzellensystem regelmäßig noch weitere Vorrichtungen. Auf der Anodenseite stellt in der Regel ein Edukttank das Edukt zur Verfügung, welches mit Hilfe einer Pumpe den Anodenräumen der Brennstoffzellen zugeführt wird. Auf der Kathodenseite wird die Luft, bzw. der Sauerstoff als Oxidationsmitel für die Kathoden über einen Kompressor zunächst verdichtet, bevor er zu den Kathodenräumen geleitet wird. Ferner wird das in den Kathodenräumen anfallende Wasser mit den Kathodenströmen ausgetragenen und in einem Kondensator abgetrennt.

Während der elektrochemischen Umsetzung in einer Brennstoffzelle wird neben der elektrischen Energie auch regelmäßig Wärme erzeugt. Bei Niedertemperatur-Brennstoffzellen wird diese Wärme bislang über den flüssigen Anodenstrom ausgetragen und die Wärme regelmäßig zunächst durch einen mit Luft oder Wasser betriebenen Wärmeaustauscher abgeführt, bevor der Anodenstrom zumindest teilweise wieder der Anode zugeführt wird.

Nachteilig wird für einen mit Wasser betriebenen Wärmeaustauscher eine zusätzliche Kühlwasserpumpe sowie ein Kühlwassertank und ein entsprechender Wasserkreislauf benötigt. Im Fall eines luftgekühlten Wärmeaustauschers wird ein Luftkompressor mit einem hohen Luftdurchsatz notwendig.

Aus US 2002/098395 A1 wird eine Brennstoffzelle beschrieben, in der der Kathode befeuchtete und komprimierte Luft zugefügt wird. Das heiße und feuchte Abgas wird teilweise rückgeführt und in den Reaktandenkreislauf wieder eingeführt. Zwischen Anodengas und Kathodengas findet kein Temperatur- oder Feuchtigkeitsausgleich statt.

In DE 100 21 946 A wird eine Steuereinheit für eine Brennstoffzelle beschrieben, die die zugeführte Wassermenge regelt. Das Wasser wird über ein Regelventil in die betroffenen Gase eingespeist.

Eine Brennstoffzelle, bei der das feuchte Anodenabgas über einen Kondensator geschickt wird und dort das Wasser auskondensiert ist aus JP 2000 208159 A bekannt. Der Kondensator ist als Wärmeaustauscher ausgelegt, die die Brennstoffzelle und den Brennstofftank erwärmt. Das auskondensierte Wasser wird in einen Behälter geleitet, aus dem das Gas wiederum aktiv befeuchtet wird.

In der nachveröffentlichten FR 2 828 011 A wird eine Brennstoffzelle offenbart, bei der die der Kathode zugeführte Luft im Gegenstrom mit dem Anodenabgas geführt wird. Der Wärmetauscher ist der Kathode vorgeschaltet und der Anode nachgeschaltet. Der Austausch von Wärme und Feuchtigkeit findet in einem Wärmetauscher/Verdampfungskühler statt. Dort wird Wasser aus dem heißen, feuchten Anodenabgas auskondensiert und anschließend gleich wieder verdampft, um das Anodenabgas zu kühlen und das Kathodengas zu befeuchten und gleichzeitig zu erwärmen. Der Kühler und der Kondensator sind miteinander Wasser leitend verbunden.

### Aufgabe und Lösung

Der Erfindung liegt die Aufgabe zugrunde, eine Brennstoffzellensystem, insbesondere mit einer Niedertemperatur-Brennstoffzellensystem bzw. ein Verfahren zum Betreiben eines solchen Systems bereitzustellen, bei dem eine effektive Abführung der in der Brennstoffzelle entstehenden Wärme und gleichzeitig die Befeuchtung des zugeführten Oxidationsmittels durch ein Minimum an Zusatzvorrichtungen erzielt werden kann.

Diese Aufgabe wird gelöst durch ein Niedertemperatur-Brennstoffzellensystem gemäß Hauptanspruch und ein Verfahren zum Betreiben eines solchen Systems gemäß Nebenanspruch. Vorteilhafte Ausführungsformen des Brennstoffzellensystems und des Verfahrens finden sich in den jeweils darauf rückbezogenen Ansprüchen.

### Gegenstand der Erfindung

Das erfindungsgemäße Niedertemperatur-Brennstoffzellensystem umfasst wenigstens eine Niedertemperatur-Brennstoffzelle mit einer Anode, einer Kathode sowie einem dazwischen angeordneten Elektrolyten. Ferner weist das Brennstoffzellensystem einen Kondensator auf, der hinter der Kathode angeordnet ist, und der für die Abtrennung des mit dem Kathodenstrom ausgetragenen Wassers geeignet ist. Zusätzlich weist das Brennstoffzellensystem einen Verdampfungskühler auf. Dieser ist, in Strömungsrichtung der Betriebsstoffe gesehen, vor der Kathode und hinter der Anode angeordnet. Zudem ist der Verdampfungskühler mit dem Kondensator über eine Wasserleitung verbunden.

Die vorteilhafte Wirkungsweise dieses Niedertemperatur-Brennstoffzellensystems wird anhand des Verfahrens zum Betreiben eines solchen Systems gemäß Nebenanspruch im Folgenden erklärt.

Das erfindungsgemäße Verfahren zum Betreiben des vorgenannten dieses Niedertemperatur-Brennstoffzellensystems umfasst die folgenden Schritte.

Der Anode einer Niedertemperatur-Brennstoffzelle, z. B. einer Direkt Methanol-Brennstoffzelle, wird ein Edukt/Wassergemisch zugeführt und dort umgesetzt. Das von der Anode anschließend abgeführte abgereicherte Edukt/Wassergemisch wird durch den nachgeschalteten Verdampfungskühler geleitet.

In der Kathode der Brennstoffzelle wird ein Oxidationsmittel, z. b. Sauerstoff oder Luft, oxidiert und nimmt dort anfallendes Produktwasser auf. In einem nachgeschalteten Kondensator wird das Produktwasser größtenteils auskondensiert und über eine Wasserleitung zumindest teilweise dem Verdampfungskühler zugeführt.

Gleichzeitig wird frisches Oxidationsmittel ebenfalls dem Verdampfungskühler zugeführt.

Die Wärme des abgereicherten Edukt/Wassergemisches wird im Verdampfungskühler auf das Oxidationsmittel und das Wasser übertragen. Dort nimmt das Oxidationsmittel durch den Wärmeübergang Wasser in Form von Dampf auf. Ein Teil des so gebildeten Oxidationsmittel/Dampfgemisches wird der Brennstoffzelle zugeführt, und der übrige Anteil des Oxidationsmittel/Dampfgemisches wird in die Umgebung entlassen.

Bei diesem Verfahren kann bei dem Verdampfungskühler als Wärmeaustauscher auf einen separaten Luft- oder Wasserkreislauf vorteilhaft verzichtet werden. Das Verfahren wird optimal so durchgeführt, dass das Verdampfen des dem Verdampfungskühler zugeführten Wassers dazu führt, dass die überschüssige Wärme aus der Brennstoffzelle in Form vom Dampf abgeleitet werden kann. Ein Teil dieses Oxidationsmittel/Dampfgemisches wird anschließend der Brennstoffzelle zugeführt, während der überschüssige Anteil an die Umgebung freigesetzt werden kann. Durch die Zuführung des Oxidationsmittel/Dampfgemisches wird vorteilhaft auch gleichzeitig die notwendige Befeuchtung des Oxidationsmittels bewirkt, die regelmäßig ein Austrocknen der Membran innerhalb der Brennstoffzelle verhindert.

In der Regel weist das aus der Anode kommende abgereicherte Edukt/Wassergemisch einer Niedertemperatur-Brennstoffzelle eine Temperatur von ca. 90 °C auf. Ein üblicherweise dem Verdampfungskühler vorgeschalteter Kompressor liefert verdichtetes Oxidationsmittel, welches in dem Verdampfungskühler einerseits selbst erwärmt wird, und andererseits verdampftes Wasser in Form von Dampf aufnimmt. Dieses Oxidationsmittel/Dampfgemisch wird anschließend mit einer Temperatur von ca. 75-80 °C in die Brennstoffzelle geleitet.

Zur Steigerung der Effizienz sieht die Erfindung in einer Ausgestaltung des Systems einen Niedertemperatur-Brennstoffzellenstapel vor, der wenigstens eine, optional auch mehrere der vorgenannten Brennstoffzellen mit nur einem Verdampfungskühler aufweist. Die Anordnung des Verdampfungskühlers erfolgt dann vorteilhaft vor der Zuführung des Oxidationsmittels zu den Kathoden, bzw. hinter der Sammelleitung des Brennstoffs (Edukt/Wassermischung) aus den Anoden.

Vorteilhaft weist ein Niedertemperatur-Brennstoffzellensystem auch eine Anordnung auf, bei der der Verdampfungskühler in einem Anodenkreislauf, mit einer Pumpe, einem Eduktmischtank sowie dem Anodenraum der Brennstoffzelle angeordnet ist. Auch diese Anordnung funktioniert sowohl mit einer einzelnen Brennstoffzelle, als auch vorteilhaft mit einem Brennstoffzellenstapel.

Eine weitere vorteilhafte Ausgestaltung sieht vor, dass ein Teil des im Kondensator abgetrennten Wassers auch einem Eduktmischtank zugeführt wird. In der entsprechenden Vorrichtung ist dafür eine leitende Verbindung z. B. in Form einer Wasserleitung zwischen dem Kondensator und dem Eduktmischtank vorgesehen. In diesem Fall kann vorteilhaft auf einen eigenen Wassertank für den Anodenkreislauf verzichtet werden.

Das erfindungsgemäße Verfahren betrifft das Betreiben eines Niedertemperatur-Brennstoffzellensystems mit wenigstens einer Brennstoffzelle umfassend eine Anode, der ein Edukt zugeführt wird, eine Kathode, der ein Oxidationsmittel zugeführt wird, und einen zwischen Anode und Kathode angeordneten Elektrolyten. Ferner weist das Brennstoffzellensystem einen Kondensator auf, der der oder den Kathoden nachgeschaltet ist. Ebenfalls zu dem Brennstoffzellensystem gehört ein Verdampfungskühler, der der bzw. den Kathoden vorgeschaltet und der bzw. den Anoden nachgeschaltet ist, und der mit dem Kondensator wasserleitend verbunden ist.

Bei dem Verfahren lassen sich zusammenfassend die folgenden Schritte für den Fall einer Brennstoffzelle aufführen:
- das aus dem Anodenraum der Brennstoffzelle austretende abgereicherte Edukt wird dem Verdampfungskühler zugeführt,
- ein Oxidationsmittel und Wasser aus dem Kondensator werden dem Verdampfungskühler zugeführt,
- die Wärme des abgereicherten Eduktes wird innerhalb des Verdampfungskühlers auf das zugeführte Wasser übertragen, welches durch Verdampfen in Wasserdampf überführt wird, gleichzeitig erwärmt sich das zugeführte Oxidationsmittel,
- das abgekühltes abgereicherte Edukt wird aus dem Verdampfungskühler abgeführt,
- das erwärmte Oxidationsmittel/(Wasser-)Dampfgemisch wird aus dem Verdampfungskühler abgeführt und zumindest teilweise der Kathode der Brennstoffzelle zugeführt,
- ein weiterer Teil des Oxidationsmittel/(Wasser)Dampfgemisch wird in die Umgebung entlassen.

Das dem Verdampfungskühler zugeführte Oxidationsmittel wird in der Regel verdichtet zugeführt. Als Oxidationsmittel sind Sauerstoff und insbesondere Luft geeignet. Die Verdichtung kann beispielsweise durch einen vorgeschalteten Kompressor erfolgen.

Eine vorteilhafte Verfahrensführung sieht vor, dass dem Verdampfungskühler soviel Wasser und Oxidationsmittel zugeführt wird, dass durch das Verdampfen und das Erwärmen des Oxidationsmittels auf die gewünschte Temperatur die überschüssige Wärme in Form des Anteils von Oxidationsmittel/Dampfgemisch aus der Brennstoffzelle abgeführt wird, und an die Umgebung entlassen wird.

Da das in der Kathode aufgrund der chemischen Umsetzung produzierte Wasser diese vorgenannte Menge in der Regel überschreitet, kann vorteilhaft auch ein Nachspeisen des Eduktmischtanks durch Produktwasser erfolgen. In einem solchen Fall sieht eine günstige Verfahrensweise vor, dass soviel Oxidationsmittel in den Verdampfungskühler eingeleitet wird, dass eine vollständige Aufnahme des dem Verdampfungskühler zugeführten Wassers erfolgen kann. Ein Teil dieses Oxidationsmittel/Dampfgemisches wird anschließend der Brennstoffzelle zugeführt, während der überschüssige Anteil an die Umgebung freigesetzt werden kann.

Das Prinzip des erfinderischen Verfahrens besteht darin, mit einfachen Mitteln die überschüssige Wärme der Brennstoffzelle, bzw. eines Brennstoffzellenstacks durch das Verdampfen von Produktwasser in Dampf und zumindest teilweise Ausschleusen dieses Dampfes aus dem System mit Hilfe des Oxidationsmittels zu bewirken.

Dazu reicht in der Regel die Menge Produktwasser, welches an der Kathode produziert wird, aus. Im Idealfall wird dabei gerade so viel Wasser aus dem System ausgeschleust, wie Produktwasser an der Kathode entsteht. Für den Wärmehaushalt wird dafür eine entsprechende Menge an zusätzlichem Oxidationsmittel zugeführt.

Das übrige Wasser in einer Art Kreislauf im System und dient über die teilweise Sättigung des zugeführten Oxidationsmittels der notwendigen Befeuchtung der Membran. Häufig entsteht an der Kathode jedoch mehr Wasser, als für die Ausschleusung der überschüssigen Wärme aus dem System benötigt wird. Zu dem durch die elektrochemische Umsetzung an der Kathode erzeugten Produktwasser kommt regelmäßig auch noch das durch die Membran permeierte Wasser von der Anodenseite hinzu. Das überschüssige Wasser kann vorteilhaft einem Eduktmischtank zugeführt werden, in dem z. B. im Fall einer Methanol-Brennstoffzelle Methanol und Wasser zu einer gewünschten Konzentration gemischt werden, bevor das Eduktgemisch der Brennstoffzelle zugeführt wird.

Der Wärmehaushalt des erfindungsgemäßen Brennstoffzellensystems ist vorteilhaft ausgeglichen und kann durch die Menge an Wasser, die dem Verdampfungskühler zugeführt wird, und den Anteil an Oxidationsmittel, welches in die Umgebung abgegeben wird, gesteuert bzw, an die Betriebsweise angepasst werden.

### Spezieller Beschreibungsteil

Nachfolgend wird der Gegenstand der Erfindung anhand von drei Figuren näher erläutert, ohne dass der Gegenstand der Erfindung dadurch beschränkt wird.

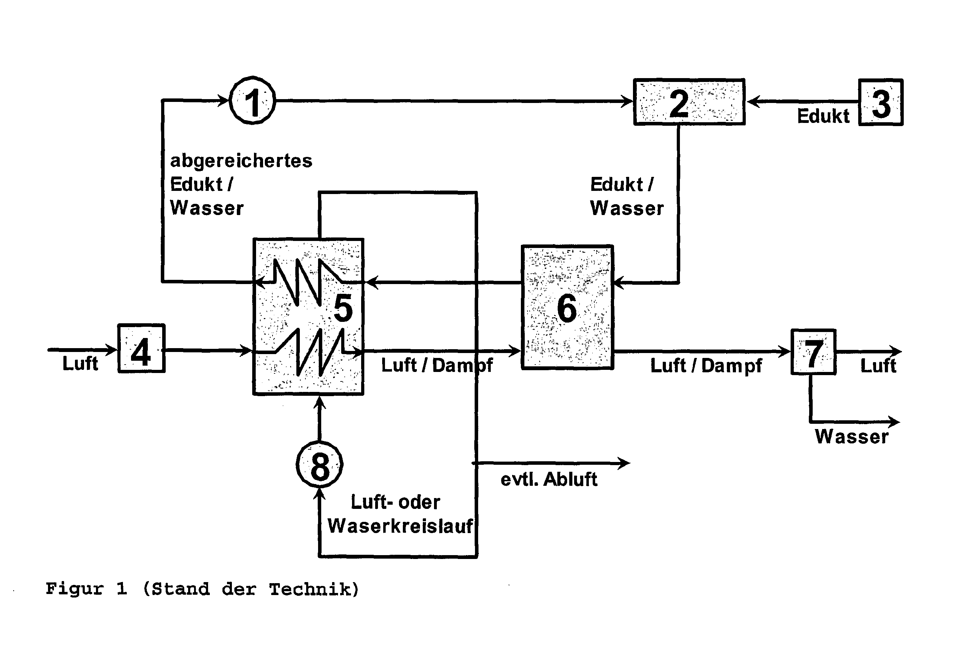

Figur 1 zeigt ein Brennstoffzellensystem mit einer Brennstoffzelle gemäß dem Stand der Technik. Über einen Verdichter/Kompressor 4 wird Oxidationsmitel, z. B. Luft verdichtet und der Brennstoffzelle 6 zugeleitet. Die mit dem Produktions- bzw. permeierten Wasser angereicherte Luft wird aus der Brennstoffzelle zu einem Kondensator 7 geleitet, wo das Wasser abgetrennt wird. Die Luft wird in die Umgebung entlassen. Das Wasser kann weiter verwendet werden. In einem Anodenkreislauf wird der Brennstoff, z. B. Methanol aus einem Vorratstank 3 in einem Mischtank 2 zusammen mit Wasser auf die gewünschte Konzentration verdünnt/bzw. angereichert. Das Edukt/Wassergemisch wird in den Anodenraum der Brennstoffzelle 6 geleitet, wo die elektrochemische Umsetzung stattfindet. Das aufgeheizte abgereicherte Edukt/Wassergemisch verlässt die Brennstoffzelle 6 und wird in einem nachgeschalteten Wärmeaustauscher 5 wieder abgekühlt. Der Wärmeaustauscher 5 wird dabei von einem externen Luft- oder Wasserkreislauf durchströmt, der die überschüssige Wärme dann z. B. in Form von Abgas an die Umgebung entlässt. In diesem externen Luft- oder Wasserkreislauf ist eine Pumpe 8 zur Umwälzung des Kühlmediums vorgesehen.

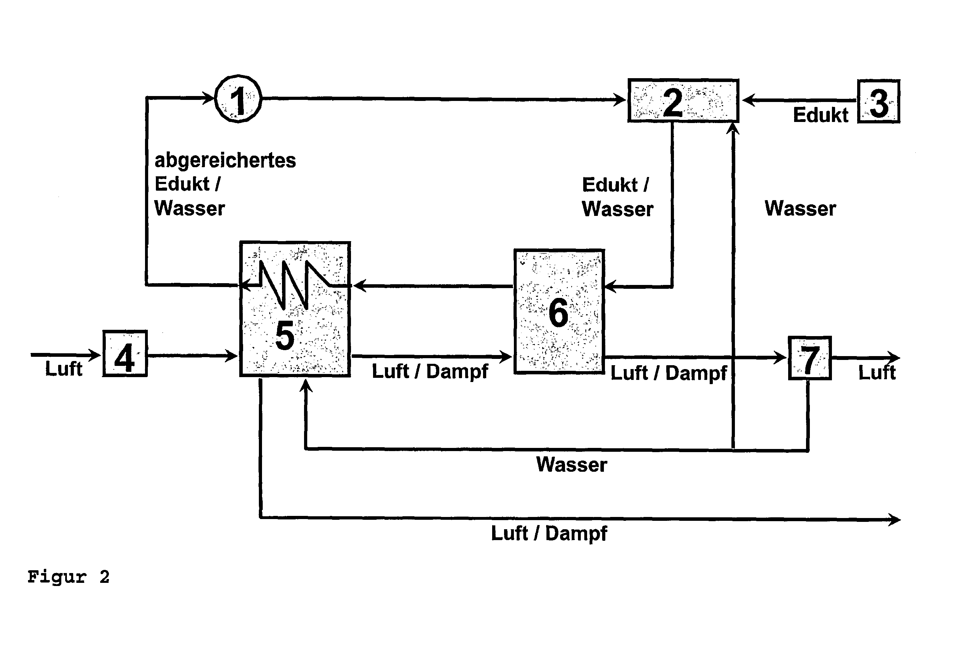

In Figur 2 ist eine Ausführungsform des erfindungsgemäßen Brennstoffzellensystems dargestellt. Die Anordnung der Brennstoffzelle 6, des Kompressors 4 und des Kondensators 7 sind analog zu Figur 1. Auch der eingezeichnete Anodenkreislauf ist identisch. Der Unterschied liegt in der Rückführung des in dem Kondensator 7 abgetrennten Wassers zu einem als Verdampfungskühler 5 ausgestalteten Wärmetauscher. Der Austrag an Wärme erfolgt in diesem Fall über das verdampfte Wasser in dem Wasser/Luftgemisch, welches zumindest teilweise an die Umgebung abgegeben wird.

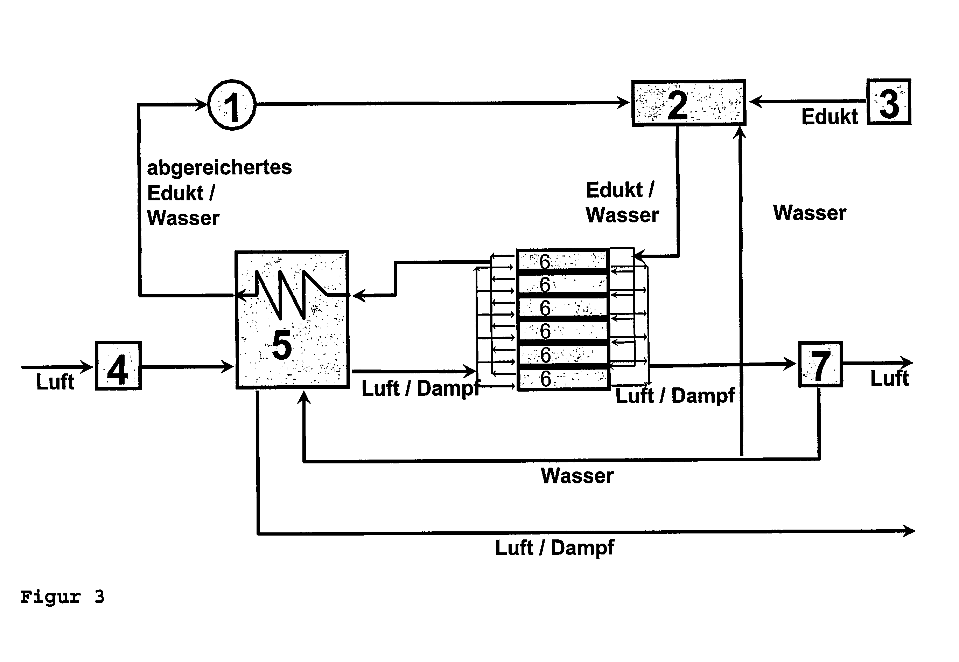

In der Figur 3 wird eine vorteilhafte Ausgestaltung der Erfindung präsentiert, bei der das Brennstoffzellensystem einen Brennstoffzellenstack umfasst. Dadurch wird die Effizienz verbessert, und der Aufwand an zusätzlichen Vorrichtungen (Kompressor 4, Kondensator 7, Verdampfungskühler 5) wird durch die Vielzahl an Brennstoffzellen relativ gering.

### Legende zur Figur

- 1: Pumpe im Anodenkreislauf
- 2: Eduktmischtank
- 3: Edukttank
- 4: Verdichter/Kompressor
- 5: Verdampfungskühler
- 6: Brennstoffzelle bzw. stack aus Einzelbrennstoffzellen
- 7: Kondensator
- 8: Pumpe im externen Kühlkreislauf

## Patentansprüche

1. Niedertemperatur-Brennstoffzellensystem mit wenigstens einer Brennstoffzelle umfassend eine Anode, eine Kathode sowie einen dazwischen angeordneten Elektrolyten,
einem Kompressor zur Zuführung bzw. teilweisen Verdichtung eines Oxidationsmittels, welcher der bzw. den Kathode(n) vorgeschaltet ist,
einem Kondensator zur Abtrennung von Wasser aus einem Kathodenabgasstrom, welcher der bzw. den Kathode(n) nachgeschaltet ist,
**gekennzeichnet durch**
einen Verdampfungskühler, der der bzw. den Kathode(n) vorgeschaltet und der der bzw. den Anode (n) nachgeschaltet ist, und der mit dem Kondensator wasserleitend verbunden ist.

2. Niedertemperatur-Brennstoffzellensystem nach einem der vorhergehenden Ansprüche 1 bis 2,
mit wenigstens drei in Serie geschalteten Brennstoffzellen.

3. Niedertemperatur-Brennstoffzellensystem nach einem der vorhergehenden Ansprüche 1 bis 2,
bei dem der Verdampfungskühler in einem Anodenkreislauf, mit einer Pumpe, einem Eduktmischtank sowie wenigstens einem Anodenraum der Brennstoffzelle(n) angeordnet ist.

4. Niedertemperatur-Brennstoffzellensystem nach einem der vorhergehenden Ansprüche 1 bis 3,
bei dem der Kondensator zusätzlich wasserleitend mit einem Eduktmischtank verbunden ist.

5. Verfahren zum Betreiben eines Niedertemperatur-Brennstoffzellensystems umfassend wenigstens eine Brennstoffzelle mit einer Anode, der ein Edukt zugeführt wird, einer Kathode, der ein Oxidationsmittel zugeführt wird, einer zwischen Anode und Kathode angeordneten Elektrolyten, einem der Kathode nachgeschalteten Kondensator, und einen Verdampfungskühler, der der Kathode vorgeschaltet und der der Anode nachgeschaltet ist, und der mit dem Kondensator leitend verbunden ist, mit den Schritten
- das aus dem Anodenraum der Brennstoffzelle austretende abgereicherte Edukt wird dem Verdampfungskühler zugeführt,
- Oxidationsmittel und Wasser aus dem Kondensator werden dem Verdampfungskühler zugeführt,
- die Wärme des abgereicherten Eduktes wird innerhalb des Verdampfungskühlers auf das zugeführte Wasser übertragen, welches durch Verdampfen in Wasserdampf überführt wird,
- das abgekühltes abgereicherte Edukt wird aus dem Verdampfungskühler abgeführt,
- ein Oxidationsmittel/Dampfgemisch wird aus dem Verdampfungskühler abgeführt und zumindest teilweise der Kathode der Brennstoffzelle zugeführt.

6. Verfahren nach vorhergehendem Anspruch 5, bei dem als Oxidationsmittel Luft eingesetzt wird.

7. Verfahren nach einem der vorhergehenden Ansprüche 5 bis 6, bei dem das dem Verdampfungskühler zugeführte Oxidationsmittel verdichtet zugeführt wird.

8. Verfahren nach vorhergehenden Ansprüchen 5 bis 7, bei dem das aus dem Verdampfungskühler abgeführte Oxidationsmittel/Dampfgemisch, welches nicht mehr der Kathode zugeführt wird, die Menge an Wasser enthält, die innerhalb der Brennstoffzelle produziert wird.

## Claims

1. Low-temperature fuel cell system with at least one fuel cell comprising an anode, a cathode and an electrolyte disposed between them,
a compressor, for supplying or for partial compression of an oxidation means, that is connected in series to the input side of the cathode or cathodes,
a condenser for separating water out from a flow, of cathode waste gas, that is connected to the outlet side of the cathode or cathodes,
**characterized by**
an evaporative cooler that is connected to the input side of the cathode or cathodes and is connected to the output side of the anode or anodes and that, in terms of water conduction, is connected to the condenser.

2. Low-temperature fuel-cell system in accordance with claim 1,
with at least three fuel cells connected in series.

3. Low-temperature fuel cell system in accordance with one of the preceding claims 1 or 2,
in which the evaporative cooler is disposed in an anode circuit with a pump, an educt mixing reservoir and at least one anodal space of the fuel cell(s).

4. Low-temperature fuel cell system in accordance with one of the preceding claims 1 to 3,
in which the condenser is additionally connected, in terms of water conduction, to an educt mixing reservoir.

5. Process for operating a low-temperature fuel cell system comprising at least one fuel cell with an anode, which has an educt leading in to it, a cathode,
which has an oxidation means supplied to it, an electrolyte disposed between the anode and the cathode, a condenser that is connected, on the outlet side, to the cathode, and an evaporative cooler that is connected in to the input side of the cathode and to the outlet side of the anode, and that is conductively connected to the condenser, with stages whereby:
- the depleted educt coming from the anodal space of the fuel cell, is supplied to the evaporative cooler,
- the oxidation agent and water from the condenser are supplied to the evaporative cooler,
- the heat of the depleted educt is, within the evaporative cooler, transferred to the supplied water that is converted into water vapour through evaporation,
- the chilled, depleted educt is conveyed from the evaporative cooler,
- an oxidation agent/vapour mixture is removed from the evaporative cooler and at least partially supplied to the cathode of the fuel cell.

6. Process in accordance with the above claim 5, in which air is used as an oxidizing agent.

7. Process in accordance with one of the above claims 5 or 6, in which the oxidation agent supplied to the evaporative cooler is supplied condensed.

8. Process in accordance with one of the preceding claims 5 to 7, in which the oxidation agent/vapour mixture, which is not further supplied to the cathode, conveyed from the evaporative cooler, contains the quantity of water that is produced in the fuel cell.

## Revendications

1. Système de piles à combustible basse température avec au moins une pile à combustible comprenant une anode, une cathode ainsi qu'un électrolyte disposé entre elles,
un compresseur, servant à amener et/ou à comprimer partiellement un agent oxydant, qui est disposé en amont de la ou des cathodes,
un condenseur, servant à séparer l'eau d'un courant d'effluent gazeux cathodique, qui est disposé en aval de la ou des cathodes,
**caractérisé par**
un réfrigérateur par évaporation qui est disposé en amont de la ou des cathodes et en aval de la ou des anodes et qui est relié au condenseur de manière à pouvoir conduire de l'eau.

2. Système de piles à combustible basse température selon l'une quelconque des précédentes revendications 1 à 2,
avec au moins trois piles à combustible montées en série.

3. Système de piles à combustible basse température selon l'une quelconque des précédentes revendications 1 à 2,
dans lequel le réfrigérateur par évaporation est disposé dans un circuit d'anode, avec une pompe, une cuve de mélange d'éduit ainsi qu'au moins une chambre anodique de la ou des piles à combustible.

4. Système de piles à combustible basse température selon l'une quelconque des précédentes revendications 1 à 3,
dans lequel le condenseur est relié en plus à une cuve de mélange d'éduit de manière à pouvoir conduire de l'eau.

5. Procédé pour faire fonctionner un système de piles à combustible basse température comprenant au moins une pile à combustible avec une anode à laquelle un éduit est amené, une cathode à laquelle un agent oxydant est amené, un électrolyte disposé entre l'anode et la cathode, un condenseur disposé en aval de la cathode, et un réfrigérateur par évaporation qui est disposé en amont de la cathode et en aval de l'anode et qui est relié au condenseur de manière à pouvoir conduire de l'eau, ledit procédé comprenant les étapes suivantes :
- l'éduit appauvri sortant de la chambre anodique de la pile à combustible est amené au réfrigérateur par évaporation,
- de l'agent oxydant et de l'eau venant du condenseur sont amenés au réfrigérateur par évaporation,
- la chaleur de l'éduit appauvri est transmise à l'intérieur du réfrigérateur par évaporation à l'eau amenée, qui est convertie en vapeur d'eau par évaporation,
- l'éduit appauvri refroidi est évacué du réfrigérateur par évaporation,
- un mélange d'agent oxydant et de vapeur est évacué du réfrigérateur par évaporation et amené au moins en partie à la cathode de la pile à combustible.

6. Procédé selon la précédente revendication 5, dans lequel l'agent oxydant utilisé est l'air.

7. Procédé selon l'une quelconque des précédentes revendications 5 à 6, dans lequel l'agent oxydant amené au réfrigérateur par évaporation est amené sous forme comprimée.

8. Procédé selon l'une quelconque des précédentes revendications 5 à 7, dans lequel le mélange d'agent oxydant/de vapeur évacué du réfrigérateur par évaporation, qui n'est plus amené à la cathode, contient la quantité d'eau produite à l'intérieur de la pile à combustible.
